# EUROPEAN PATENT APPLICATION

(11) **EP 4 082 686 A1**
(43) Date of publication of application: **02.11.2022**
(21) Application number: 19932280.1
(22) Date of filing: 26.12.2019
(51) Int. Cl.: B21B 37/00, C22C 16/00, C21D 8/10

(54) **METHOD OF PRODUCING TUBULAR PRODUCTS FROM A ZIRCONIUM-BASED ALLOY**

(71) Applicant: Joint-Stock Company "TVEL", Moscow 115409 (RU)
(72) Inventor: NOVIKOV, Vladimir Vladimirovich, 123458, Moscow (RU); KABANOV, Aleksandr Anatolevich, 115191, Moscow (RU); NIKULINA, Antonina Vasilevna, 125124, Moscow (RU); MARKELOV, Vladimir Andreevich, 123308, Moscow (RU); SABLIN, Mihail Nikolaevich, 115612, Moscow (RU); FILATOVA, Nadezhda Konstantinovna, 142700, Moskovskaya oblast, g. Vidnoe (RU); SOLOVEV, Vadim Nikolaevich, 121614, Moscow (RU); OZHMEGOV, Kirill Vladimirovich, 143185, Moskovskaya oblast, g. Zvenigorod (RU); CHINEIKIN, Sergei Vladimirovich, 427621, Udmurtskaya Respublika, g. Glazov (RU); LOZITCKII, Sergei Vasilevich, 427622, Udmurtskaya Respublika, g. Glazov (RU); ZIGANSHIN, Aleksandr Gusmanovich, 427628, Udmurtskaya Respublika, g. Glazov (RU)
(74) Representative: Friese Goeden Patentanwälte PartGmbB
(86) International application number: PCT/RU2019/001024
(87) International publication number: WO 2021/133195

(57) **Abstract**

The invention is referred to the nuclear technical field, particularly to production of zirconium alloy tubular products used as the structural components of the core in water-cooled nuclear reactors, including the reactors of VVER and PWR type.

The manufacturing method for the tubular products made of zirconium-based alloy includes the ingot melting by multiple vacuum arc remelting, mechanical processing of the ingot, heating, multi-stage hot forging of the ingot for production of the forged piece, subsequent mechanical processing of the forged piece for production of the round-profile blank, manufacturing of tubular billets, their quenching and tempering, application of the protective coating and heating to the hot pressing temperature, hot pressing, removal of the protective coating, vacuum thermal treatment, multiple cold rolling in order to produce tubular products, with intermediate vacuum thermal treatment after each cold rolling, and the final vacuum thermal treatment is carried out at the final size with subsequent final finishing operations.

The technical result is processibility of the material at all stages of hot and cold pressure shaping applied in the course of tubular product manufacturing as well as high strength characteristics and corrosion resistance of the tubular products.

## Description

### TECHNICAL FIELD OF THE INVENTION

The invention is referred to the nuclear technical field, particularly to production of zirconium alloy tubular products used as the structural components of the core in water-cooled nuclear reactors, including the reactors of VVER and PWR type.

### PRIOR ART

Zirconium alloys are used as the materials for structural components of power nuclear reactors due to their unique properties: small thermal absorption section as well as physical and mechanical properties. The requirements for corrosion resistance and hydrogen absorption in high-temperature water and water steam, strength, irradiation growth, thermal and thermal-radiation creep are imposed on the zirconium alloy products for the reactor core. The materials shall also have high processibility characteristics. Properties and processibility of the products made of this alloy depend not only on the composition but also on their manufacturing method including the ingot melting, hot and cold processing, thermal treatment regimes for the intermediate and final size, as well as the final finishing operations.

The patent "Manufacturing Method for Zirconium Alloy Tubular Products (Variants)" (RU 2123065C1, published on 12.03.1997, cl. C22F/1/18) including preliminary hot deformation of the melted ingot, production of the tubular billet by hot forming (extrusion), quenching, mechanical processing and tempering, cold deformation with intermediate thermal treatment and final annealing for multicomponent zirconium alloy is known.

The drawbacks of this method reside in the fact that no protective coating is applied on the billets prior to hot extrusion resulting in oxidation of the metal in the course of the process and reduction of the processibility of tubular products, and no final finishing operations enabling to remove residual process contaminations from the surface of tubular products and reduce the surface roughness are provided thus decreasing corrosion resistance of the products.

The patent "Manufacturing Method for Zirconium Alloy Products" RU 2110600C1 (published on 10.05.1998, cl. C22F/1/18) including manufacturing of the primary blank from the ingot by hot forming (extrusion), subsequent hot forming of the intermediate billet, quenching and tempering of the cut-to-length sections, hot forming, tempering and cold rolling is known.

The drawbacks of this method reside in the fact that no protective coating is applied prior to hot extrusion resulting in oxidation of the metal in the course of the process and reduction of the processibility of tubular products, and no final finishing operations enabling to remove residual process contaminations from the surface of tubular products and reduce the surface roughness are provided thus decreasing corrosion resistance of the products.

The patent "Tubes Made of Zirconium-Based Alloys and Their Manufacturing Method" RU 2298042C2 (published on 27.04.2004, cl. C22F/1/18C21D1/18, C22C16/00) is known. The manufacturing method includes homogenizing processing of the extruded hollow billets, their quenching with water, stress relieving, double-stage cold rolling with intermediate and final annealing.

The drawbacks of this patent reside in the fact that no protective coating is applied prior to hot extrusion resulting in oxidation of the metal in the course of the process and reduction of the processibility of tubular products. Application of the double-rolling cold processing scheme with final homogenizing processing in the (α+β)-area enables to achieve high strength of the product, in this case annealing in the (α+β)-area results in generation of the metastable β-Zr-phase in the product structure affecting corrosion of zirconium alloys. The process flow diagram does not provide for any final finishing operations enabling to remove residual process contaminations from the surface of tubular products and reduce the surface roughness thus decreasing corrosion resistance of the products.

The patent "Zirconium Alloy with Excellent Corrosion Resistance for Fuel Element Claddings and Their Manufacturing Method" US 2016/0307651A1 (published on 20.10.2016, cl. G21C 3/07, B22D 21/00, B22D 7/00, C22C 16/00, C22F 1/18) is the closest to the claimed method. The patent specifies the composition of corrosion-resistant zirconium alloy and the method for manufacturing of fuel element claddings made of this alloy, including the ingot melting, the ingot coating with the protective steel shell, thermal treatment of the ingot together with the shell prior to hot rolling, hot rolling, removal of the protective steel coating, thermal treatment of hot-rolled tubular billets, three runs of cold rolling, intermediate thermal treatment after each rolling and final thermal treatment.

Drawbacks of the method: application of the carbon-containing steel shell which can interact with zirconium alloy at the hot rolling temperature with generation of carbides. Hot rolling of the ingot does not provide for uniform processing of the cast structure and is characterized by axial porosity of the billets. The number and size of the pores increase from the periphery towards the centers of billets thus resulting in deterioration of the material processibility. Low temperatures of intermediate annealing (570-590°C for the 1^{st} run, 560-580°C for the 2^{nd} run, 560-580°C for the 3^{rd} run) for the selected deformation manufacturing scheme (30-40% of deformation at the first and the third stages, and 50-60% - at the second stage of cold deformation) are insufficient for relaxation of residual stresses and completion of recrystallization processes that affects the material processibility and its resistance to creep and irradiation growth. Use of the three-level long-term final annealing (1^{st} level - 460-470°C, 2^{nd} level - 510-520°C, 3^{rd} level - 580-590°C) enables to achieve the increased material strength level; in this case the characteristics of creep and irradiation growth resistance are also deteriorated primarily due to incomplete recrystallization process. Besides, use of hot rolling at T=630-650°C in combination with few stages of cold deformation and low annealing temperatures prevents from completion of the metastable β-Zr-phase breakage and fission process resulting in deterioration of the product corrosion resistance. The process flow diagram does not provide for any final finishing operations enabling to remove residual process contaminations from the surface of tubular products and reduce the surface roughness thus decreasing corrosion resistance of the products.

### SUMMARY OF THE INVENTION

The purpose of this invention is to develop the manufacturing method for the tubular products used as the structural components of the core in water-cooled nuclear reactors, including the reactors of VVER and PWR type.

The technical result is processibility of the material at all stages of hot and cold pressure shaping applied in the course of tubular product manufacturing as well as high strength characteristics and corrosion resistance of the tubular products.

The technical result is achieved in the manufacturing method for the tubular products made of zirconium-based alloy containing (% wt.): niobium - 0.9-1.7; stannum - 0.5-2.0; iron- 0.3-1.0; chromium - 0.002-0.200, carbon - 0.003-0.040, oxygen - 0.04-0.15, silicon - 0.002-0.15, zirconium - all the rest, including the ingot melting by multiple vacuum arc remelting, mechanical processing of the ingot, heating, multi-stage hot forging of the ingot for production of the forged piece, subsequent mechanical processing of the forged piece for production of the round-profile blank, manufacturing of tubular billets, their quenching and tempering, application of the protective coating and heating to the hot pressing temperature, hot pressing, removal of the protective coating, vacuum thermal treatment, multiple cold rolling with the total deformation degree of 25.6-56.8% per a run and the tubular coefficient of Q=1.0 - 6.4 in order to produce tubular products, with intermediate vacuum thermal treatment after each cold rolling, and the final vacuum thermal treatment is carried out at the final size with subsequent final finishing operations.

Multi-stage hot forging of the ingot is carried out at the temperature of 980°C to 720°C with the total deformation degree of up to 93% and with intermediate heating at the temperature of 890°C to 850°C.

Tubular billets are produced by drilling of the axial center hole and subsequent boring of the axial center hole in the round-profile blank divided into cut-to-length sections.

Quenching is carried out at the temperature of 1050-1100°C and tempering at the temperature of 450-600°C.

Hot pressing of the tubular billet is carried out at the temperature of 640°C to 600°C and the elongation ratio of µ=8.5-9.0.

Vacuum thermal treatment of the tubular billets in the intervals between hot pressing and cold rolling is carried out at the temperature of 605-630°C.

Multiple cold rolling of the tubular billets is carried out with the total deformation degree of 41.8-56.8% per a run and the tubular coefficient of Q=1.0-1.6 for the tubular products of uniform cross-section.

Multiple cold rolling of the tubular billets is carried out with the total deformation degree of 25.6-56.5% per a run and the tubular coefficient of Q=1.0-6.4 for the tubular products of variable cross-section.

Vacuum thermal treatment of the tubular billets in the intervals between cold rollings is carried out at the temperature of 570-630°C.

The final vacuum thermal treatment of the tubular products is carried out at the temperature of 535-545°C.

The final vacuum thermal treatment of the tubular products is carried out at the temperature of 600-620 °C.

Vacuum thermal treatment of the tubular products is carried out at the residual pressure in the furnace not exceeding 1·10⁻⁴-1·10⁻⁵ mm Hg.

Chemical and mechanical processing of the surfaces is carried out at the final size of the tubular products.

The selected proportion of alloying components in the zirconium alloy provides for the processing properties, corrosion resistance, stable characteristics of mechanical properties and deformation resistance of the tubular products.

The advantage of the tubular product manufacturing in accordance with the claimed method resides in the fact that hot thermo-mechanical treatment ensures uniform processing of the cast structure along the ingot length and cross-section, and application of the protective coating provides for protection against gas pickup and prevents diffusion interaction between the coating and the tubular billet. The process also provides for manufacturing of the tubular products with the maximum possible fracture viscosity and ductility level for this composition. Multiple cold rolling with the total deformation degree of 25.6-56.8% per a run and the tubular coefficient of Q=1.0-6.4 with intermediate vacuum thermal treatment results in formation of the material structure with the minimum residual stresses at the processing stages and development of recrystallization processes thus improving processibility of the tubular products. Depending on the necessary requirements for strength of the tubular products the final vacuum thermal treatment of the tubular products is carried out in two different temperature ranges. The first range (535-545°C) provides for formation of the homogeneous partially recrystallized structure (the recrystallization degree of at least 40%), and the second range (600-620°C) provides for formation of the homogeneous recrystallized structure (the recrystallization degree of 100%).

Final finishing operations provide for the surface roughness Ra of less than 0.8 µm on the outer and inner surface thus increasing stability of the corrosion properties for the products.

### EMBODIMENT OF THE INVENTION

The method is embodied in the following way:

### Example 1

In accordance with the claimed technical solution the manufacturing technology for zirconium tubular products includes the following operations. Melting of the alloy ingot consisting of: niobium 1.05-1.07 % (wt.), stannum 1.24-1.27% (wt.), iron 0.31-0.34 % (wt.), chromium 0.0025-0.003 % (wt.), carbon 0.011-0.019 % (wt.), oxygen 0.064-0.065 % (wt.), silicon 0.0025-0.0035 % (wt.), zirconium - all the rest. The initial alloying components are mixed with electrolytic zirconium powder, and then consumable electrodes are formed and melted by two-stage vacuum arc remelting. The side surface of the ingot is processed mechanically. The ingot is heated to the temperature of 980°C. Multi-stage hot forging of the ingot at the first stage is carried out at the temperature of 980°C, at the last stage - at the temperature of 720°C, with intermediate heating within the temperature range of 890°C to 850°C.

The total deformation Σε for hot forging of the ingot is 93%. Heating and intermediate heat-up of the ingot is carried out in the electric resistance-type furnace. Round-profile blanks Ø109×28.5 mm are manufactured by mechanical processing of the forged pieces.

Tubular billets are produced by drilling of the axial center hole and subsequent boring of the axial center hole in the round-profile blank divided into cut-to-length sections.

Quenching is carried out at the temperature of 1050-1100°C, and tempering - at the temperature of 450-600°C.The surface roughness of the billets is not more than Ra = 2.5 µm. Then the coating is applied on the tubular billets in order to protect them against gas pickup in the course of subsequent heating and hot pressing processes (for example, copper through the use of the copper coating application operation).

Heating of the tubular billets for hot pressing is carried out in the electric resistance-type furnace. The heating temperature of the tubular billets prior to pressing is within the range of 640°C to 600°C. Pressing is carried out with the elongation ratio of µ=8.9. Then the copper coating is removed.

Then the tubular billets are sent for vacuum thermal treatment at the temperature of T=605-630°C. The tubular billets are rolled on the cold reducing mills of HPT, HPTR, KPW type in 5 runs with the total deformation Σε of 41.8 to 56.5% per a run; in this case the tubular coefficient Q is within the range of 1.00 - 1.6, and the tubular products of uniform cross-section are produced. Intermediate vacuum thermal treatment is carried out within the temperature range of 570°C to 610°C. The final vacuum thermal treatment is carried out at the temperature of T=535-545 °C or T=600-620°C. Vacuum furnaces with the underpressure level of at least 1·10⁻⁴-1·10⁻⁵ mm Hg are used.

The tubes are subjected to a set of operations subsequent to the final annealing and trimming, particularly: jet etching, alkali treatment, grinding of the surface.

The alloy tubular products Ø12.60×11.24 mm manufactured in accordance with the claimed technical solution are characterized with the following properties (see Table, Example 1).

### Example 2

To be embodied in the same way as Example 1. Composition of the alloy: niobium 0.94- 0.97 % (wt.), stannum 1.15-1.20 % (wt.), iron 0.40-0.46 % (wt.), chromium 0.004- 0.005 % (wt.), carbon 0.008 - 0.009 % (wt.), oxygen 0.10-0.11 % (wt.), silicon 0.0055-0.0060 % (wt.). The initial alloying components are mixed with zirconium magnesiothermal sponge, and then consumable electrodes are formed and melted by three-stage vacuum arc remelting.

The tubular products Ø12.60×10.90 mm manufactured in accordance with the claimed technical solution are characterized with the following properties (see Table, Example 2).

### Example 3

To be embodied in the same way as Example 1. Composition of the alloy: niobium 0.90-0.93 % (wt.), stannum 1.18-1.22 % (wt.), iron 0.82-0.87 % (wt.), chromium 0.008-0.009 % (wt.), carbon 0.010-0.011% (wt.), oxygen 0.082-0.086 % (wt.), silicon 0.0052-0.0058 % (wt.). The initial alloying components are mixed with zirconium magnesiothermal sponge, and then consumable electrodes are formed and melted by two-stage vacuum arc remelting.

The tubular products Ø13.00×11.00 mm manufactured in accordance with the claimed technical solution are characterized with the following properties (see Table, Example 3).

### Example 4

In accordance with the claimed technical solution the manufacturing technology for zirconium tubular products includes the following operations. Melting of the alloy ingot consisting of: niobium 1.06-1.09 % (wt.), stannum 1.28-1.30 % (wt.), iron 0.65-0.68 % (wt.), chromium 0.009-0.011 % (wt.), carbon 0.009-0.010 % (wt.), oxygen 0.08-0.09 % (wt.), silicon 0.009-0.010 % (wt.). The initial alloying components are mixed with electrolytic zirconium powder, and then consumable electrodes are formed and melted by two-stage vacuum arc remelting. The side surface of the ingot is processed mechanically. The ingot is heated to the temperature of 980°C. Multi-stage hot forging of the ingot is carried out within the temperature range of 980 to 720°C with intermediate heat-up within the temperature range of 890 to 850°C.

The total deformation Σε for multi-stage hot forging of the ingot is 93%. Heating and intermediate heat-up of the ingot is carried out in the electric resistance-type furnace. Round-profile blanks Ø109×28.5 mm are manufactured by mechanical processing of the forged pieces. Tubular billets are produced by drilling of the axial center hole and subsequent boring of the axial center hole in the round-profile blank divided into cut-to-length sections. The surface roughness of the billets is not more than Ra = 2.5 µm. Quenching is carried out at the temperature of 1050-1100°C and tempering at the temperature of 450-600°C.

Then copper coating is applied on the billets in order to protect them against gas pickup in the course of subsequent heating and hot pressing processes.

Heating of the billets for hot pressing is carried out in the electric resistance-type furnace. The heating temperature of the billet prior to pressing is within the range of T=640-600°C. Pressing is carried out with the elongation ratio of µ=8.9. Then the copper coating is removed.

Subsequently the billets are sent for vacuum thermal treatment at the temperature of T=605-630°C. Then the produced billets are rolled at the cold reducing mills of HPT, HPTR type in 6 runs; in this case the tubular coefficient Q is within the range of 1.0-6.4. The variable cross-section of tubular billets is formed through the use of the combined multi-diameter expander with the total deformation degree of Σε =25.6-56.5 %.

Intermediate vacuum thermal treatment is carried out within the temperature range of T=575-590°C. The final vacuum treatment of the tubular products is carried out at the temperature of T=535°C or T=610°C depending on the strength requirements. Vacuum furnaces with the underpressure level of at least 1·10⁻⁴-1·10⁻⁵ mm Hg are used.

Subsequent to the final vacuum thermal treatment of the tubular products the set of the following final finishing operations is carried out: jet etching, alkali treatment, grinding of the surface.

Subsequent to formation of the tubular products of variable cross-section from the tubular billet of variable cross-section with different cumulative deformation degree in various sections of the tubular billet the thin-walled and thick-walled sections of the finished pipe have approximately the same cumulative deformation degree providing for uniform mechanical properties of the tubular products after the final vacuum thermal treatment.

The tubular products Ø12.60×11.24 (10.1) mm manufactured in accordance with the claimed technical solution are characterized with the following properties (see Table, Example 4).

### Example 5

To be embodied in the same way as Example 4.

The tubular products Ø12.60×10.90 (8.8) mm manufactured in accordance with the claimed technical solution are characterized with the following properties (see Table, Example 5).

### INDUSTRIAL APPLICABILITY

Therefore, the presented manufacturing method for tubular products ensures high strength characteristics and corrosion resistance of the tubular products.

**Table - Properties of the tubes manufactured of the Zr-Nb-Sn-Fe system alloy in accordance with the claimed technical solution**

| Example No. | Chemical composition of the alloy, % (wt.) | Number of remeltings/ weight of the final remelting ingot, tons | Tube dimensions, mm | Mechanical properties | | | | | | | | | | | | Corrosion 400 °C τ =3600 h | Roughness Ra, µm |
|---|---|---|---|---|---|---|---|---|---|---|---|---|---|---|---|---|---|
| | | | | σ_{b}┴, MPa | σ_{0.2}┴, MPa | δ┴, % | σ_{b}^{//}, MPa | σ_{0.2}^{//}, MPa | δ^{//}, % | σ_{b}┴, MPa | σ_{0.2}┴, MPa | δ┴, % | σ_{b}^{//}, MPa | σ _{0.2}^{//}, MPa | δ^{//}, % | Weight gain, mg/dm² | |
| | | | | **T ₜₑₛₜ=20°C** | | | | | | **Tₜₑₛₜ=350°C** | | | | | | | |
| 1 | 2 | 3 | 4 | 5 | 6 | 7 | 8 | 9 | 10 | 11 | 12 | 13 | 14 | 15 | 16 | 17 | 18 |
| 1 | Nb 1.05-1.07, Sn 1.24-1.27, Fe 0.31-0.34, Cr 0.0025-0.003, C 0.011-0.019, O 0.064-0.065, Si 0.0025-0.0035, Zr-all the rest | 2 vacuum arc remeltings/ 3.5 | Ø12.60×11.24 FVTT^{∗} temperature 540°C, 3 hours | 52.5 | 46.0 | 24.6 | 56.3 | 43.3 | 39.1 | 28.1 | 27.0 | 24.6 | 31.4 | 22.2 | 48.2 | 149-156 | Outer surf. <0.5 Inner surf. <0.8 |
| | | | Ø12.60×11.24 FVTT^{∗} temperature 610°C, 3 hours | 51 | 36 | 38 | 52 | 35 | 36 | 28 | 15.2 | 45 | 29 | 16 | 35 | 150-160 | Outer surf. <0.5 Inner surf. <0.8 |
| 2 | Nb 0.94-0.97, Sn 1.15-1.20, Fe 0.40-0.46, Cr 0.004-0.005, C 0.008-0.009, O 0.10-0.11, Si 0.0055-0.0060, Zr-all the rest | 3 vacuum arc remeltings/ 3.5 | Ø12.60×10.90 FVTT^{∗} temperature 540°C, 3 hours | 55.5 | 49 | 22.5 | 56.5 | 41.5 | 33 | 30 | 27 | 27 | 31.5 | 20 | 40.5 | 148-152 | Outer surf. <0.5 Inner surf. <0.8 |
| 3 | Nb 0.9-0.93, Sn 1.18-1.22, Fe 0.82-0.87, Cr 0.008-0.009, C 0.01-0.011, O 0.082-0.086, Si 0.0052-0.0058, Zr-all the rest | 2 vacuum arc remeltings/ 1.8 | Ø13.00×11.00 FVTT^{∗} temperature 545°C, 3 hours | 55.5 | 48 | 19 | 57 | 44 | 31.5 | 30 | 27.5 | 24.5 | 34 | 21.5 | 37-39 | 150-154 | Outer surf. <0.5 Inner surf. <0.8 |

| Table (continued) | | | | | | | | | | | | | | | | | |
|---|---|---|---|---|---|---|---|---|---|---|---|---|---|---|---|---|---|
| 1 | 2 | 3 | 4 | 5 | 6 | 7 | 8 | 9 | 10 | 11 | 12 | 13 | 14 | 15 | 16 | 17 | 18 |
| 4 | Nb 1.06-1.09 % (wt.), Sn 1.28-1.30 % (wt.), Fe 0.65-0.68 % (wt.), Cr 0.009-0.011 % (wt.), C 0.009-0.010 % (wt.), O 0.08-0.09 % (wt.), Si 0.009-0.010 % (wt.), Zr- all the rest | 2 vacuum arc remeltings/ 3.5 | Ø12.60×11.24 (10.1) FVTT^{∗} temperature 535°C, 3 hours | 53 | 47.5 | 24 | 55 | 41.5 | 35.5 | 29.5 | 26.5 | 27.5 | 33 | 24 | 37.5 | 147-154 | Outer surf. <0.5 Inner surf. <0.8 |
| 5 | Nb 1.06-1.09, Sn 1.28-1.30, Fe 0.65-0.68, Cr 0.009-0.011, C 0.009-0.010, O 0.08-0.090, Si 0.009-0.01, Zr-all the rest | 2 vacuum arc remeltings/ 3.5 | Ø12.60×10.90 (8.8) FVTT^{∗} temperature 600°C, 3 hours | 52.5 | 45.5 | 32 | 54.1 | 40.5 | 36 | 27 | 26 | 31 | 30.5 | 22 | 36 | 152-160 | Outer surf. <0.5 Inner surf. <0.8 |

| | | | | | | | | | | | | | | | | | |
|---|---|---|---|---|---|---|---|---|---|---|---|---|---|---|---|---|---|
| FVTT^{∗} - Final Vacuum Thermal Treatment | | | | | | | | | | | | | | | | | |

## Claims

1. The manufacturing method for the tubular products made of zirconium-based alloy containing (% wt.): niobium - 0.9-1.7; stannum - 0.5-2.0; iron- 0.3-1.0; chromium - 0.002-0.200, carbon - 0.003-0.040, oxygen - 0.04-0.15, silicon - 0.002-0.15, zirconium - all the rest, including the ingot melting by multiple vacuum arc remelting, mechanical processing of the ingot, heating, multi-stage hot forging of the ingot for production of the forged piece, subsequent mechanical processing of the forged piece for production of the round-profile blank, manufacturing of tubular billets, their quenching and tempering, application of the protective coating and heating to the hot pressing temperature, hot pressing, removal of the protective coating, vacuum thermal treatment, multiple cold rolling with the total deformation degree of 25.6-56.8% per a run and the tubular coefficient of Q=1.0 - 6.4 in order to produce tubular products, with intermediate vacuum thermal treatment after each cold rolling, and the final vacuum thermal treatment is carried out at the final size with subsequent final finishing operations.

2. The method as claimed in Claim 1 **characterized in that** multi-stage hot forging of the ingot is carried out at the temperature of 980°C to 720°C with the total deformation degree of 93% and with intermediate heat-up at the temperature of 890°C to 850°C.

3. The method as claimed in Claim 1 **characterized in that** tubular billets are produced by drilling of the axial center hole and subsequent boring of the axial center hole in the round-profile blank divided into cut-to-length sections.

4. The method as claimed in Claim 1 **characterized in that** quenching is carried out at the temperature of 1050-1100°C and tempering - at the temperature of 450-600°C.

5. The method as claimed in Claim 1 **characterized in that** hot pressing of the tubular billet is carried out at the temperature of 640°C to 600°C and with the elongation ratio of µ=8.5-9.0.

6. The method as claimed in Claim 1 **characterized in that** vacuum thermal treatment of the tubular billets in the intervals between hot pressing and cold rolling is carried out at the temperature of 605-630°C.

7. The method as claimed in Claim 1 **characterized in that** multiple cold rolling of the tubular billets is carried out with the total deformation degree of 41.8-56.8% per a run and the tubular coefficient of Q=1.0-1.6 for the tubular products of uniform cross-section.

8. The method as claimed in Claim 1 **characterized in that** multiple cold rolling of the tubular billets is carried out with the total deformation degree of 25.6-56.5% per a run and the tubular coefficient of Q=1.0-6.4 for the tubular products of variable cross-section.

9. The method as claimed in Claim 1 **characterized in that** vacuum thermal treatment of the tubular billets in the intervals between cold rollings is carried out at the temperature of 570-630°C.

10. The method as claimed in Claim 1 **characterized in that** the final vacuum thermal treatment of the tubular products is carried out at the temperature of 535-545°C.

11. The method as claimed in Claim 1 **characterized in that** the final vacuum thermal treatment of the tubular products is carried out at the temperature of 600-620°C.

12. The method as claimed in any of Claims 6, 9, 10, 11 **characterized in that** vacuum thermal treatment of the tubular products is carried out at the residual pressure in the furnace not exceeding 1·10⁻⁴-1·10⁻⁵ mm Hg.

13. The method as claimed in Claim 1 **characterized in that** chemical and mechanical treatment of the surfaces is carried out at the final size of the tubular products.
